# NEW EUROPEAN PATENT SPECIFICATION

(11) **EP 0 465 188 B2**
(45) Date of publication and mention of the opposition decision: **29.03.2000**
(45) Mention of the grant of the patent: 07.09.1994
(21) Application number: 91305938.2
(22) Date of filing: 01.07.1991
(51) Int. Cl.: B60C 15/06

(54) **Passenger radial tyre**
Radialluftreifen für PKW
Pneumatique radial pour automobiles

(30) Priority: 05.07.1990 JP 17852690; 05.07.1990 JP 17852790; 05.07.1990 JP 17852890; 10.08.1990 JP 21278390
(43) Date of publication of application: 08.01.1992
(73) Proprietor: SUMITOMO RUBBER INDUSTRIES LIMITED, Kobe-shi Hyogo-ken (JP)
(72) Inventor: Yoshikawa, Hideaki, Kobe-shi, Hyogo-ken (JP); Sakamoto, Masayuki, Sirakawa-shi, Fukushima-ken (JP); Sugihara, Hideaki, Kobe-shi, Hyogo-ken (JP); Kajiwara, Shinzo, Kobe-shi (JP)
(74) Representative: Morgan, James Garnet

(56) References cited:
- EP-A- 0 339 511
- DE-A- 1 505 888
- DE-A- 2 325 530
- GB-A- 1 361 053
- US-A- 4 139 040
- US-A- 4 766 940
- US-A- 4 779 659

## Description

The present invention relates to a pneumatic tyre, more particularly a car type radial ply tyre in which a reduction in tyre weight is achieved without sacrificing steering stability.

On recent high-performance passenger cars, a low aspect ratio tyre which is excellent in steering stability, grip performance and structural durability at a high speed is widely used. In particular, for a sports car in which high speed performance is of special importance, tyres whose aspect ratio is less than 55% are now becoming used.

In such a low aspect ratio tyre: a weight reduction is further required to achieve a further improvement in car performance, e.g. running performance, low fuel consumption and the like.

In a conventional pneumatic tyre, as shown in Fig. 11, each bead is provided with a bead apex C between a carcass main portion A and a carcass turned up portion B. In order to increase the bending rigidity of the bead portion and thereby improve the steering stability of the tyre. The bead apex C is made of hard rubber and extends radially outwardly from the bead core into the sidewall over the radially outer edge of the rim flange. Thus, the bead apex has a considerable volume and weight.

A tyre according to the preamble of claim 1 is known from US-A-4 779 659.

It is therefore an object of the present invention to provide a pneumatic tyre in which the tyre weight is decreased but without decreasing the steering stability. According to the present invention there is provided a pneumatic tyre having the features of claim 1.

Embodiments of the present invention will now be described in detail in conjunction with the accompanying drawings, in which:
- Fig. 1: is a sectional half view of a tyre not in accordance with the present invention, but useful to explain the nomenclature used;
- Fig.2: is a part plan view showing of the belt of the tyre in Fig. 1;
- Fig.3: is a half sectional view showing a first embodiment of the present invention;
- Fig.4: is a sectional view of a modified bead portion of a tyre;
- Fig.5: is a sectional view of another modified bead portion of a tyre;
- Fig.6: is a sectional view of another modified bead portion; and
- Fig.7: is a half sectional view showing a conventional tyre.

In the figures, each tyre 1 has a tread 2, a pair of axially spaced beads 4, and a pair of sidewalls 3 extending between the tread edges and the bead portion. A bead core 5 is disposed in each bead 4 and a radial carcass 6 extends between the beads. A belt 12 is disposed radially outside the carcass 6 and inside a rubber tread.

In the Figures each tyre 1 is shown mounted on its regular rim 10 and inflated to its normal inner pressure.

The carcass 6 comprises at least one ply of radially arranged cords extending between the beads 4 through the sidewalls 3 and the tread 2 and turned up around the bead cores 5 from the axially inside to the outside thereof to form two turned up portion 6B and one main portion 6A therebetween.

For the carcass cords, organic fibre cords, e.g. nylon, polyester. rayon and aromatic polyamide, or metal cords, or carbon fibre cords, or the like can be used. Preferably a light weight material cord is used.

The carcass may include a ply which is turned up reversely around the bead cores from the axially outside to the inside thereof, and/or a ply which is not turned up around the bead cores. It is however, preferable to minimise the number of carcass plies for tyre weight reduction.

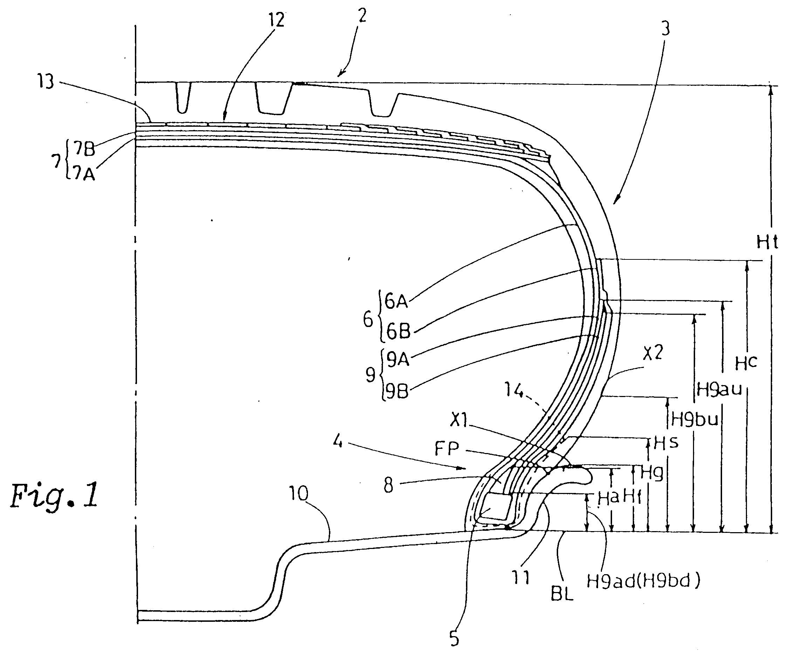

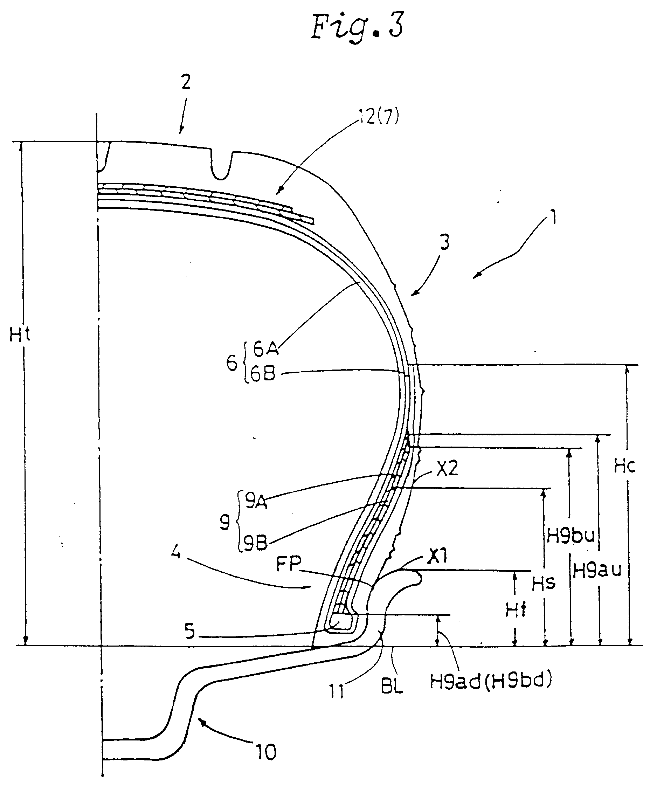

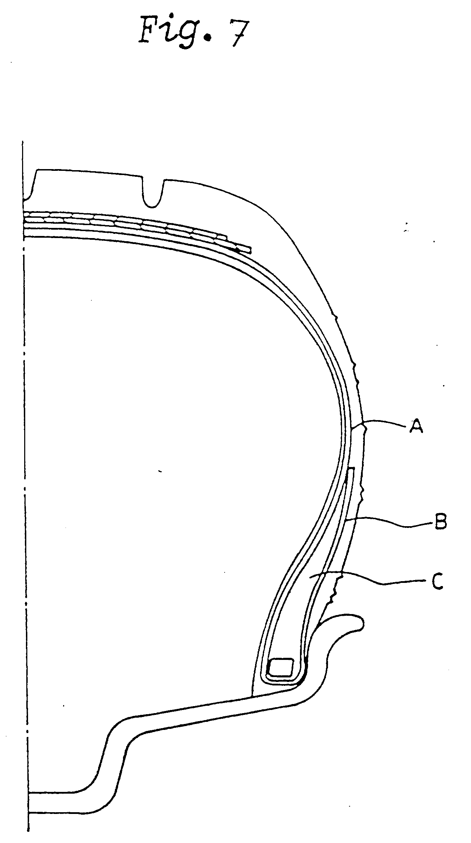

A reinforcing ply layer 9 is provided in each bead and sidewall and no apex 8 is provided in Figs. 3 to 6, but only in the tyres of Figs. 1 and 7.

These components provide the necessary lower sidewall stiffness in combination with the carcass turn up portions 6A and 6B.

The carcass turnup height Hc, or the radial distance of the radially outer edge of the carcass turned up portion 6B from the bead base line BL, is set to be not less than 1/2 the tyre section height Ht defined as the radial distance from the bead base line BL to the radially outermost point on the tread face.

In Fig.1, the tyre 1 is a passenger tyre having a low aspect ratio (tyre section height/tyre section width) of not more than 0.55 (55%). The tyre size is P225/50R16, and two reinforcing layers 9A and 9B and a small size bead apex 8 are disposed in each bead 4.

The belt 12 comprises a breaker 7 and a band 13 disposed over the belt both being in the tread portion.

The small bead apex 8 is made of hard rubber having a JIS A hardness of 60 to 90 disposed radially outside the bead core 5 and between the carcass main portion 6A and the turned up portion 6B, and extending radially outwardly and tapering to provide a generally triangular cross section.

The radial height Ha of the radially outer edge of the bead apex from the bead base line BL is set to be not more than the radial height Hf of the radially outer edge X1 of a flange 11 of the regular rim 10, whereby the bead apex rubber does not extend into the region radially outwards of the above-mentioned outer edge X1 of the rim flange and so the bead apex volume is greatly decreased in comparison with that in the conventional tyre.

Further, the bead apex height Ha is less than 13% of the tyre section height Ht. The reinforcing layer 9 comprises two reinforcing layers 9A and 9B disposed between the carcass main portion 6A and the turned up portion 6B.

Each layer 9A,9B extends at least between two heights one being the rim flange height Hf and the other being a height Hs which is 0.25 times the tyre section height Ht. Thus the layers may extend between these heights or over a greater distance.

The radially outer edges of the reinforcing layers 9A and 9B are extended to heights H9au and H9bu, respectively, each of which is greater than 0.25 times the tyre section height Ht.

The radially inner edges of the reinforcing layers 9A and 9B extend to heights H9ad and H9bd, respectively, each of which is smaller than the height Hf of the outer edge X1 of the rim flange 11 so that the layers 9A and 9B extend over a greater distance than the minim specified of Hf to Hs.

The radially inner edges are secured between the bead apex 8 and the carcass turned up portion 6B, and contact the radially outer face of the bead core 5.

If the heights of the radially outer edges of the reinforcing layers are smaller than the minimum height Hs (= 0.25 Ht), it becomes too difficult to maintain the required bead rigidity.

When the height of the radially inner edges thereof are larger than the height Hf, there is no reinforcing layer in the most deflected part of the tyre when loaded, that is, the part around the outer edge of the rim flange in which the amount of deformation is very large. and as a result, the bead rigidity is greatly decreased.

More preferably, the inner edge of each reinforcing layer is located at a position radially inwards of a boundary point FP which is the point where the tyre side face comes into contact with the rim flange.

Further, the height Hgau, Hgbu of the outer edge of each reinforcing layer is smaller than the radial height Hc of the carcass turned up portion to avoid stress concentration at the outer edge and to thereby reduce the chance of rubber separation failure.

It is preferable that the outer edges of the reinforcing layers and the outer edge of the carcass turned up portion 6B are not aligned with each other. Therefore, the height H9au of the axially inner reinforcing layer 9A is larger than that of the outer layer 9B.

For the cords of the reinforcing layer, aromatic polyamide fibre cords are used because of their light weight and high modulus of the same level as the steel cords.

In passenger tyres, the cord thickness or construction may be 1000d/2 to 1500d/3, the twist number is then 20 to 55 twist/5cm, and the cord count is 30 to 50/5cm.

The cords of each reinforcing layer are laid radially at an inclination angle of 15 to 75 degrees, more preferably 45 to 75 degrees, with respect to the radial direction of the tyre, and the cords in each reinforcing layer cross the cords of the next layer, whereby the bead rigidity is effectively increased.

Further, the bead portion is provided with an additional bead reinforcing layer 14 made of organic fibre cords, preferably aromatic polyamide fibre cords. This reinforcing layer 14 is positioned around the bead cores to extend from the axially inner side to the outer side of the bead portion.

The radial height Hg of the radially outer edge of the axially outward portion thereof is larger than the rim flange height Hf.

The belt 12 is composed of a breaker 7 comprising at least two crossed plies 7A and 7B disposed on the radially outside of the carcass, and a band 13 disposed radially outside the breaker.

For the breaker cords, aromatic polyamide cords are used to achieve minimum tyre weight while providing the required hoop effect for the tread portion.

On the other hand, in an aromatic polyamide cord, the strength and rigidity against bending deformation is low in comparison with steel cords. As a result, road grip performance, tread wear life and noise performance are liable to be impaired, and a breaker edge failure is also liable to be caused.

In order to avoid those problems, the above-mentioned band 13 is disposed radially outside the breaker 7.

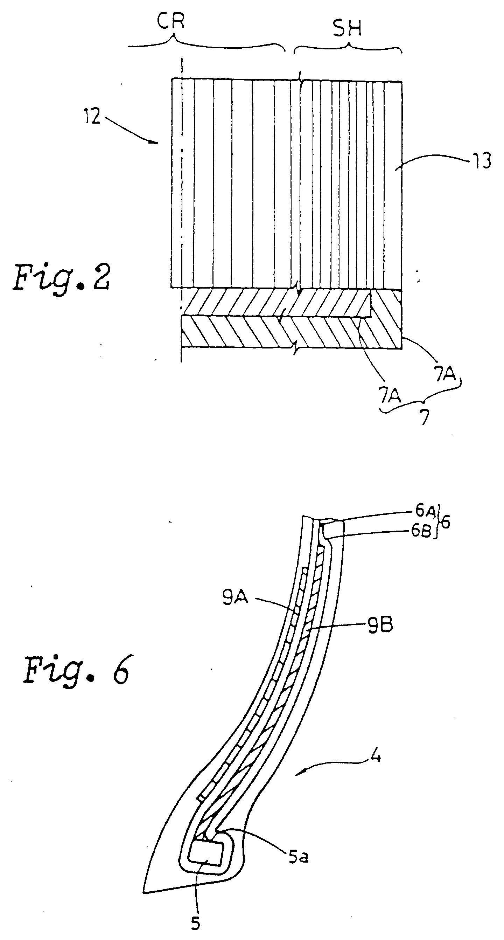

The band 13 may be, as shown in Fig. 2, formed by winding a ribbon of rubber around the breaker spirally and continuously in the circumferential direction of the tyre.

In the ribbon of rubber, a nylon cord or 2 to 15 parallel nylon cords are embedded in the longitudinal direction thereof.

In tread shoulder regions SH, the axially adjacent windings are overlapped with each other by about a half of the ribbon width, but not overlapped in a tread crown region CR, whereby the hoop effect of the band 13 becomes larger in the shoulder regions than the crown region, and the rigidity thereof is also increased which can compensate for lack of the rigidity of the aromatic polyamide breaker at its edge portions.

In the band 13, therefore, the or each nylon cord is laid at almost zero angle or a small angle with respect to the circumferential direction of the tyre, that is, laid in parallel with the tyre circumferential direction of the tyre.

On the other hand, the cords of each breaker ply are laid at an inclination angle of 10 to 30 degrees with respect to the circumferential direction of the tyre so as to cross the cords of the next breaker ply.

Therefore, the cords of the breaker and band form a triangulated structure.

Fig.3 shows a first embodiment of the present invention, in which no bead apex at all is disposed in the bead portions 4.

In this embodiment, the tyre size is 1856OR14, and the carcass 6 is turned up around the bead cores 5 from the axially inside to the outside thereof. Each turned up portion 6B thereof is bent abruptly to extend along the radially outer surface 5a of the bead core, and then extend radially outwardly along the axially outer surface of the reinforcing layer 9 and the carcass main portion 6A.

The radially inner edges of the reinforcing layers 9A and 913 are extended to the outer surface 5a of the bead core to contact thereto.

Test tyres of size P225/5OR16 having specifications given in Table 1 were prepared and tested for spring constant, steering stability, ride comfort and tyre noise. The test results are also shown in Table 1.

In the tests, the lateral spring constant was defined as a lateral force (100 kgf = 980N) divided by the amount of deformation (mm) of the tyre caused by the lateral force, when the tyre was mounted on its regular rim and inflated to its regular pressure.

The longitudinal spring constant was defined as a variation (100 kgf = 980N) of the longitudinal force divided by the variation of the amount of deformation (mm) of the tyre when the longitudinal force is increased to 450 kgf (4410N)
from 350 kgf (3430N).

The steering stability, ride comfort and tyre noise were evaluated in five ranks by a test driver, using a 300Occ passenger car running at speeds between 100 km/h and 240 km/h. The larger the point, the better the result.

The tyre weight of Example 1 according to the present invention was lighter than Reference tyres 1 and 2 while the other tyre performance factors were improved or maintained.

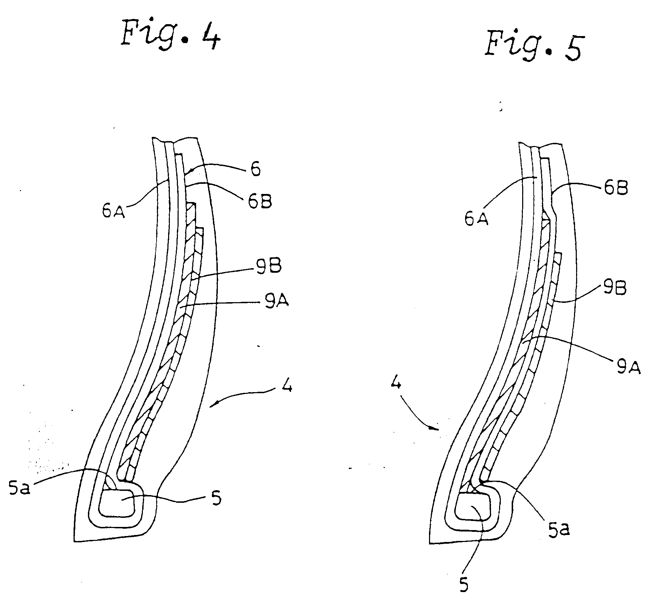

Fig.4 shows a modified bead portion of a tyre, wherein the bead apex 8 is completely eliminated. The carcass 6 is turned up around the bead cores 5 from the axially inside to the outside thereof.

Each turned up portion 6B is bent abruptly to contact the radially outer face 5a of the bead core 5, and then extends radially outwardly while contacting with the carcass main portion 6A. The inner edge of each reinforcing layer is extended to the bent part of the carcass turned up portion 6B to contact thereto.

Fig.5 shows another modified bead portion of a tyre, wherein the bead apex 8 is completely eliminated.

Fig.6 shows another modified bead portion of a tyre, wherein the bead apex 8 is completely eliminated.

The carcass 6 is turned up around the bead cores 5 from the axially inside to the outside thereof. Each turned up portion 6B is bent abruptly to contact with the radially outer face 5a of the bead core 5, and then
extends radially outwardly while contacting with the axially outer surface of the reinforcing layer 9B.

The inner edge of the axially outer reinforcing layer 9B is extend to the outer face 5a of the bead core to contact thereto.

In the embodiments shown in Figs.3-6, for the cords of the reinforcing layers, organic fibre cords, e.g. nylon, polyester and the like, and metal cords, e.g. steel can be used. However. aromatic polyamide fibre cords having a modulus of the same level as the steel colds but a lighter weight are preferably used.

When aromatic polyamide cords are used, the cord thickness and construction are 720d/2 to 3000d/2. the twist number is 20 to 70 /10cm, and the cord count is 25 to 45 /5cm.

Test tyres of size 185/60R14 having the specification given in Table 2 were prepared and tested for spring constant, lane change stability, yaw convergence, cornering G on asphalt. The test results are also shown in Table 2.

The lane change stability and yaw convergence were evaluated in five ranks by a test driver. The larger so the point, the better the result.

The lane change stability is the stability when a quick lane change was made during straight running at a speed of 100 km/h, and the yaw convergence is the convergence of the yaw caused by the above mentioned quick lane change.

The cornering G on asphalt was calculated from the maximum cornering speed marked by the test vehicle during cornering on a dry asphalt road at a radius of 50 meters and the lateral force on the vehicle at the maximum cornering speed.

The weights of the Example tyres according to the present invention were lighter than the Reference tyres while the other tyre performance factors were improved of maintained.

Further, in each bead portion, three reinforcing layers can be disposed, in which the axially inner layer is disposed axially inside the carcass main portion, the axially outer layer is disposed axially outside the carcass turned up portion, and the middle layer is disposed between the carcass main portion and the turned up portion.

As described above. in tyres according to the present invention, the bead apex does not exist in the flexing sidewall regions. Also the reinforcing layers are provided which extend from each bead portion into the sidewalls. Thus the tyre weight is reduced without sacrificing the steering stability, and the fuel consumption performance can be improved.

Further, when aromatic polyamide cords are used for the reinforcement, the tyre weight can be further decreased.

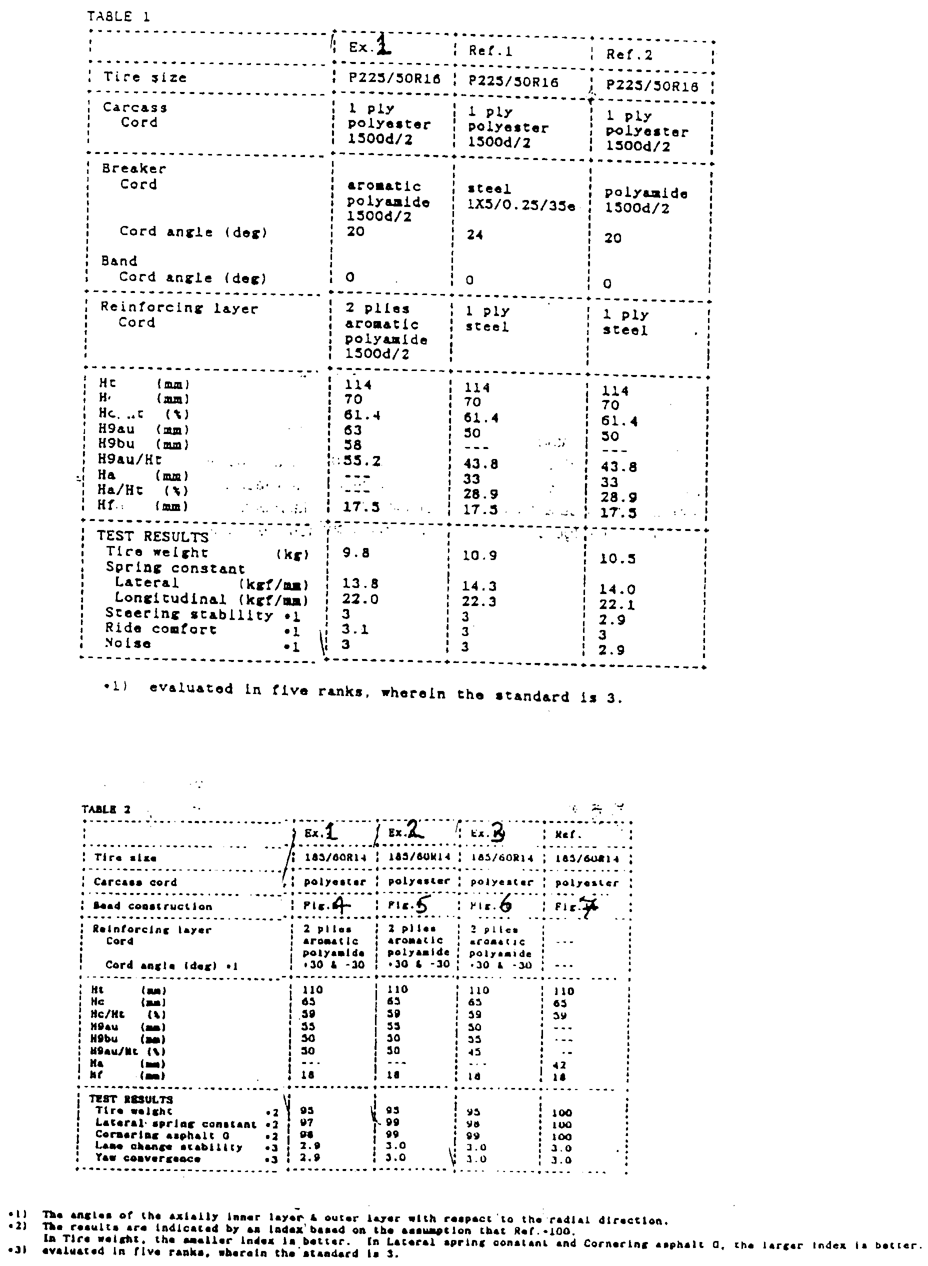

## Claims

1. A pneumatic tyre comprising a tread (2), sidewalls (3), a pair of spaced apart beads (4), each reinforced by a bead core (5), a radial carcass (6) having a main portion (6A) extending around the tyre and edges turned up around each bead core (5) from the axially inner side to the outer side to provide a turned up portion (6B) wherein, in each sidewall, a reinforcing ply layer (9) extends radially outwardly from the height of the bead core (5) into the sidewall such that the height (H9ad, H9bd), of the radially inner edge of the reinforcing ply layer is no higher than the height (Hf) of the rim flange of the wheel for which the tyre is designed and wherein the height (H9au, H9bu) of the radially outer edge of the reinforcing ply layer is at least 0.25 times the tyre section height Ht; characterised in that the main portion (6A), turn up (6B) and reinforcing ply layer (9) are directly adjacent radially outwards of the bead core (5) and over the full length of the reinforcing ply layer (9); in that no bead apex and no bead filler is present at all and in that the turned up portion (6B) is wrapped closely around the bead core (5).

2. A tyre according to claim 1, characterised in that the radial height of the radially outer edge of each carcass turned up portion (6B) is not more than 50 % of the tyre section height (Ht) each measured radially from the bead base line, the bead reinforcing ply layer (9) comprises high modulus cord reinforcing layers (9A, 9B) extending between the bead core (5) and a radial height of 25 % of the tyre section height (Ht) each measured from the bead base line.

3. A tyre according to claim 2, characterised in that the high modulus cord reinforcing layers (9) comprise two layers (9A, 9B) disposes between the carcass main portion (6A) and each carcass turned up portion (6B).

4. A tyre according to claim 2, characterised in that the high modulus cord reinforcing layers (9A, 9B) comprise one layer (9A) disposed between the carcass main portion (6A) and each carcass turned up portion ((6B), and one layer (9B) disposed axially outside each carcass turned up portion (6B).

5. A tyre according to claim 2, characterised in that the high modulus cord reinforcing layers (9) comprise two layers (9A, 9B) disposed axially outside each carcass turned up portion (6B).

6. A tyre according to claim 2, characterised in that the high modulus cord reinforcing layers (9) comprise one layers (9B) disposed between the carcass main portion (6A) and each carcass turned up portion (6B) and one layer (9A) disposed axially inside the carcass main portion (6A).

7. A tyre according to claim 2, characterised in that the high modulus cord reinforcing layers (9) comprise two layers disposed axially inside the carcass main portion (6A).

8. A tyre according to claim 2, characterised in that the high modulus cord reinforcing layers (9) comprise one layer disposed axially outside each carcass turned up portion (6B), one layer disposed between the carcass main portion (6A) and each carcass turned up portion (6B) and one layer disposed axially inside the carcass main portion (6A).

## Patentansprüche

1. Luftreifen mit einer Lauffläche (2), Seitenwänden (3), einem Paar von auseinander beabstandeten Wülsten (4), die jeder durch einen Wulstkern (5) verstärkt sind, einer radialen Karkasse (6) mit einem Hauptteil (6A), der sich um den Reifen erstreckt, und Rändern, die um jeden Wulstkern (5) von der axial inneren Seite zu der äußeren Seite umgeschlagen sind, um einen umgeschlagenen Teil (6B) vorzusehen, wodurch in jeder Seitenwand eine Verstärkungslagenschicht (9) vorgesehen ist, die sich radial auswärts von der Höhe des Wulstkerns (5) in die Seitenwand erstreckt, so daß die Höhe (H9ad, H9bd) des radial inneren Randes der Verstärkungslagenschicht nicht höher als die Höhe (Hf) des Felgenhorns des Rades ist, für welches der Reifen entworfen ist, und wobei die Höhe (H9au, H9bu) des radial äußeren Randes der Verstärkungslagenschicht zumindest 0,25 mal die Reifenschnitthöhe (Ht) beträgt, dadurch gekennzeichnet, daß der Hauptteil (6A), der Umschlag (6B) und die Verstärkungslagenschicht (9) direkt benachbart radial auswärts des Wulstkerns (5) und über die volle Länge der Verstärkungslagenschicht (9) angeordnet sind, daß überhaupt kein Wulstreiter und Wulstkeil vorhanden sind, und daß der umgeschlagene Teil (6B) eng um den Wulstkern (5) gewickelt ist.

2. Reifen nach Anspruch 1, dadurch gekennzeichnet, daß die radiale Höhe des radial äußeren Randes von jedem umgeschlagenen Karkassenteil (6B) nicht mehr als 50 % der Reifenquerschnittshöhe (Ht), jede radial von der Wulstgrundlinie gemessen, beträgt, die Wulstverstärkungslagenschicht (9) Hochmodulkordverstärkungsschichten (9A, 9B) umfaßt, die sich zwischen dem Wulstkern (5) und einer radialen Höhe von 25 % der Reifenquerschnittshöhe (Ht), jede von der Wulstgrundlinie gemessen, erstrecken.

3. Reifen nach Anspruch 2, dadurch gekennzeichnet, daß die Hochmodulkordverstärkungsschichten (9) zwei Schichten (9A, 9B) umfassen, die zwischen dem Karkassenhauptteil (6A) und jedem umgeschlagenen Karkassenteil (6B) angeordnet sind.

4. Reifen nach Anspruch 2, dadurch gekennzeichnet, daß die Hochmodulkordverstärkungsschichten (9A, 9B) eine Schicht (9A), die zwischen dem Karkassenhauptteil (6A) und jedem umgeschlagenen Karkassenteil (6B) angeordnet ist, und eine Schicht (9B) umfassen, die axial außerhalb jedes umgeschlagenen Karkassenteiles (6B) angeordnet ist.

5. Reifen nach Anspruch 2, dadurch gekennzeichnet, daß die Hochmodulkordverstärkungsschichten (9) zwei Schichten (9A, 9B) umfassen, die axial außerhalb jedes umgeschlagenen Karkassenteils (6B) angeordnet sind.

6. Reifen nach Anspruch 2, dadurch gekennzeichnet, daß die Hochmodulkordverstärkungsschichten (9) eine Schicht (9B) umfassen, die zwischen dem Karkassenhauptteil (6A) und jedem umgeschlagenen Karkassenteil (6B) angeordnet ist, und eine Schicht (9A), die axial innerhalb des Karkassenhauptteils (6A) angeordnet ist.

7. Reifen nach Anspruch 2, dadurch gekennzeichnet, daß die Hochmodulkordverstärkungsschichten (9) zwei Schichten umfassen, die axial innerhalb des Karkassenhauptteils (6A) angeordnet sind.

8. Reifen nach Anspruch 2, dadurch gekennzeichnet, daß die Hochmodulkordverstärkungsschichten (9) eine Schicht, die axial außerhalb jedes umgeschlagenen Karkassenteils (6B) angeordnet ist, eine Schicht, die zwischen dem Karkassenhauptteil (6A) und jedem umgeschlagenen Karkassenteil (6B) angeordnet ist, und eine Schicht umfassen, die axial innerhalb des Karkassenhauptteils (6A) angeordnet ist.

## Revendications

1. Pneumatique comprenant une bande de roulement (2), des flancs (3), deux talons espacés (4), renforcés chacun par une tringle (5), une carcasse radiale (6) ayant une partie principale (6A) qui s'étend autour du pneumatique et des bords repliés autour de chaque tringle (5) du côté axialement interne vers le côté externe pour la formation d'une partie repliée (6B) dans laquelle, dans chaque flanc, une couche (9) d'une nappe d'armature s'étend radialement vers l'extérieur depuis la hauteur de la tringle (5) dans le flanc afin que la hauteur (H9ad, H9bd) du bord radialement interne de la couche de nappe d'armature ne soit pas supérieure à la hauteur (Hf) du flasque de la jante de la roue pour laquelle le pneumatique est prévu, et dans lequel la hauteur (H9au, H9bu) du bord radialement externe de la couche de nappe d'armature est égale à 0,25 fois au moins la hauteur Ht en coupe du pneumatique, caractérisé en ce que la partie principale (6A), la partie repliée (6B) et la couche de nappe d'armature (9) sont directement adjacentes radialement vers l'extérieur de la tringle (5) et sur toute la longueur de la couche de nappe d'armature (9), et en ce qu'aucune pointe de bourrage de talon et aucun organe de remplissage de talon n'est présent du tout, et en ce que la partie repliée (6B) entoure intimement la tringle (5).

2. Pneumatique selon la revendication 1, caractérisé en ce que la hauteur radiale du bord radialement externe de chaque partie repliée de carcasse (6B) ne dépasse pas 50 % de la hauteur (Ht) en coupe du pneumatique, mesurées chacune radialement depuis la ligne de base de talon, la couche de nappe d'armature de talon (9) comprenant des couches d'armature (9A, 9B) de câblés de module élevé s'étendant entre la tringle (5) et une hauteur radiale égale à 25 % de la hauteur en coupe du pneumatique (Ht), chaque hauteur étant mesurée par rapport à la ligne de base de talon.

3. Pneumatique selon la revendication 2, caractérisé en ce que les couches d'armature (9) de câblés de module élevé comportent deux couches (9A, 9B) disposées entre la partie principale (6A) de carcasse et chaque partie repliée (6B) de carcasse.

4. Pneumatique selon la revendication 2, caractérisé en ce que les couches d'armature (9A, 9B) de câblés de module élevé comprennent une première couche (9A) placée entre la partie principale (6A) de carcasse et chaque partie repliée (6B) de carcasse, et une couche (9B) placée axialement à l'extérieur de chaque partie repliée de carcasse (6B).

5. Pneumatique selon la revendication 2, caractérisé en ce que les couches d'armature (9) de câblés de module élevé comprennent deux couches (9A, 9B) placées axialement à l'extérieur de chaque partie repliée (6B) de carcasse.

6. Pneumatique selon la revendication 2, caractérisé en ce que les couches d'armature (9) de câblés de module élevé comprennent une première couche (9B) placée entre la partie principale (6A) de carcasse et chaque partie repliée (6B) de carcasse et une autre couche (9A) disposée axialement à l'intérieur de la partie principale (6A) de carcasse.

7. Pneumatique selon la revendication 2, caractérisé en ce que les couches d'armature (9) de câblés de module élevé comprennent deux couches placées axialement à l'intérieur de la partie principale (6A) de carcasse.

8. Pneumatique selon la revendication 2, caractérisé en ce que les couches d'armature (9) de câblés de module élevé comprennent une couche disposée axialement à l'extérieur de chaque partie repliée (6B) de carcasse, une couche placée entre la partie principale (6A) de carcasse et chaque partie repliée (6B) de carcasse, et une couche placée axialement à l'intérieur de la partie principale (6A) de carcasse.
